**Europäisches Patentamt**

**European Patent Office**

**Office européen des brevets**

(19)

(11) Veröffentlichungsnummer: **0 128 939**
**B1**

(12)

# EUROPÄISCHE PATENTSCHRIFT

(45) Veröffentlichungstag der Patentschrift:
**05.11.86**

(21) Anmeldenummer: **84900270.4**

(22) Anmeldetag: **23.12.83**

(86) Internationale Anmeldenummer:
**PCT/DE 83/00217**

(87) Internationale Veröffentlichungsnummer:
**WO 84/02566 (05.07.84 Gazette 84/16)**

(51) Int. Cl.⁴: **F 16 L 37/12,** F 16 L 37/00,
F 16 L 37/28

(54) **STECKKUPPLUNG.**

(30) Priorität: **23.12.82 DE 3247784**

(43) Veröffentlichungstag der Anmeldung:
**27.12.84 Patentblatt 84/52**

(45) Bekanntmachung des Hinweises auf die Patenterteilung:
**05.11.86 Patentblatt 86/45**

(84) Benannte Vertragsstaaten:
**AT BE CH DE FR GB LI LU NL SE**

(56) Entgegenhaltungen:
**GB-A-1 138 359**
**GB-A-1 392 407**
**US-A-2 388 179**
**US-A-2 941 820**

**Fluid Power International, Band 34, Juli 1969, Nr. 400, London (GB), "Coupling/Slide Valve", Seite 1**

(73) Patentinhaber: **WEH, Erwin, Siemensstrasse 5, D-7918 Illertissen (DE)**

(72) Erfinder: **WEH, Wolfgang, Siemensstrasse 5, D-7918 Illertissen (DE)**

(74) Vertreter: **Kahler, Kurt, Dipl.- Ing., Raiffeisenstrasse 4, D-8931 Walkertshofen (DE)**

## Beschreibung

Die Erfindung betrifft eine Steckkupplung gemäß dem Oberbegriff des Patentanspruchs 1.

Eine derartige Steckkupplung ist aus der US-A-12 97 719 bekannt. Diese Steckkupplung verwendet eine Muffe, die auf die Außenseite der Druckleitung aufgesetzt ist und die in ihrer hinteren Stirnwand Öffnungen besitzt, durch die Spannbacken durchgreifen, die einseitig an einem Befestigungsteil angebracht sind. Die Spannhacken greifen dadurch in ein Gewinde eines in die Muffe eingeführten Gewindeanschlusses ein, daß ihre freien Enden mit Schrägflächen versehen sind, die mit an der Innenseite der Muffe angebrachten Schrägflächen zusammenarbeiten. Für ein druckdichtes Spannen ist es erforderlich, von Hand das Befestigungsteil relativ zur Druckleitung zu verdrehen. Ferner kann die Druckzuführung erst erfolgen, wenn der Kupplungsvorgang beendet ist.

Der Erfindung liegt die Aufgabe zugrunde, eine Steckkupplung anzugeben, bei der der Kupplungs- und Entkupplungsvorgang mittels des zugeführten Druckmediums erfolgt und bei der im abgekuppelten Zustand keine Druckmedium aus der Druckleitung ausströmt.

Diese Aufgabe wird erfindungsgemäß gelöst durch eine Steckkupplung mit den Merkmalen des Kennzeichens des Patentanspruchs 1.

In den verschiedenen Stellungen der axial auf dem zylindrischen Gehäuse verschiebbaren Muffe kann einmal im abgekuppelten Zustand der Druckmediumaustritt verhindert werden. Zum anderen drückt der unter Druck stehende Kolben die Spannbacken zusammen, so daß diese in den Gewindeanschluß eingeführt werden können. In einer anderen Stellung der Muffe verschiebt das Druckmedium den Kolben in umgekehrter Richtung und preßt die Spannbacken in das Gewinde, wohei in einer weiteren Stellung Druckmedium zu der druckmittelbetätigten Vorrichtung durchgelassen wird. Das Verschieben der Muffe erfolgt in Richtung des Ankuppelns bzw. Abkuppelns, so daß sich ein fließender Vorgang ergibt.

Bevorzugte Weiterbildungen der erfindungsgemäßen Steckkupplung sind in den Unteransprüchen gekennzeichnet.

Die US-PS 23 88 179 beschreibt eine Steckkupplung, bei der die Spannbacken dadurch zusammengedrückt werden, daß ein auf Schrägflächen laufender Ring von Hand in Richtung zum Gewindeanschluß gedrückt wird.

Die erfindungsgemäße Steckkupplung ist besonders geeignet zum Ankupp n einer Druckleitung an zu prüfende druckmittelbetätigte Vorrichtungen.

Ausführungsbeispiele der erfindungsgemäßen Steckkupplung werden nun unter Bezugnahme auf die Zeichnungen beschrieben. Es zeigen

Fig. 1 einen Längsschnitt durch eine erste Ausführungsform der erfindungsgemäßen Steckkupplung,

Fig. 2a bis 2e schematisch die verschiedenen Funktionsstellungen der Steckkupplung gemäß Fig. 1,

Fig. 3 einen Längsschnitt durch eine zweite Ausführungsform der erfindungsgemäßen Steckkupplung, und

Fig. 4a bis 4e schematisch die verschiedenen Funktionsstellungen der Steckkupplung gemäß Fig. 3. Bester Weg zur Ausführung der Erfindung.

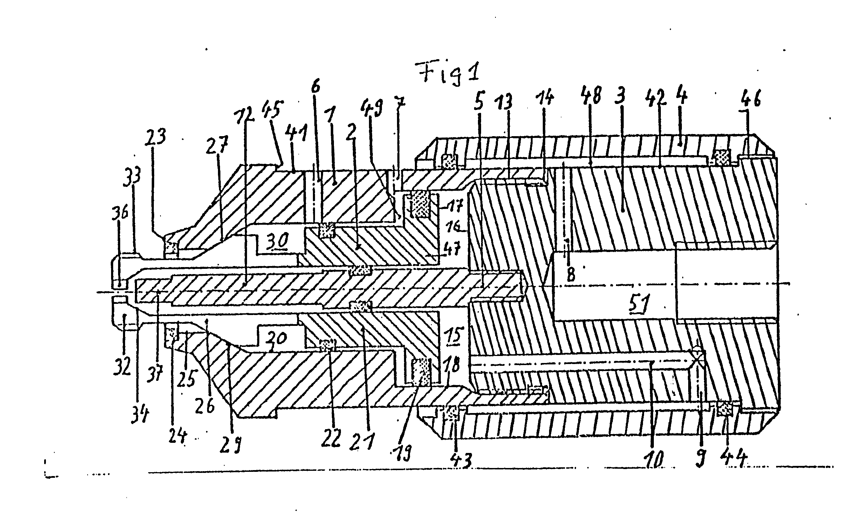

Gemäß Fig. 1 ist ein Zylinderstück 1 mit einem zylindrisch ausgebildeten Kern 3 vorzugsweise über ein Gewinde 13 und Dichtung 14 druckdicht verbunden. Im Inneren des Zylinderstücks 1 ist auf einem zentrisch in der Stirnseite 16 des Kerns 3 befestigten Stift 5 ein Befestigungsteil 2 längsverschieblich geführt. Die eine Stirnseite 17 des Befestigungsteils 2 bildet mit der Stirnseite 16 des Kerns 3 und einer erweiterten Zylinderbohrung 18 im Zylinderstück 1 einen ersten Zylinderraum 15, wobei das kolbenförmig ausgestaltete Stirnende des Befestigungsteils 2 zur Zylinderbohrung 18 hin mittels einer Dichtung 19 druckdicht geführt ist.

Das Zylinderstück 1 besitzt eine weitere engere Zylinderbohrung 20, in der der mittlere Abschnitt 21 des Befestigungsteils 2 über eine Dichtung 22 druckdicht abgedichtet geführt ist.

Zur Prüfanschlußstelle hin kann das Zylinderstück 1 mundstückförmig, d.h. mit sich verjüngendem Durchmesser, ausgebildet sein. In der Stirnseite 23 ist ein Dichtungsring 24 eingeläßen, der im angeschlossenen Zustand gegen die Stirnseite der zu prüfenden Vorrichtung druckdicht anliegt.

Auch das Innere des Zylinderstücks 1 verjüngt sich gegen die Stirnseite 23 hin kegelstumpfförmig zu einer Bohrung 25, durch die der Befestigungsabschnitt 26 des Befestigungsteils 2 hindurchragt. Ein kegelstumpfförmiger Mantel 27 des Befestigungsabschnitts 26 gleitet auf der kegelstumpfförmigen Innenwand 29 des Zylinderteils 1.

Zwischen dem Befestigungsabschnitt 26 und der Stirnseite des Kolbenteils 21 wird durch einen ringförmigen Einstich in dem Befestigungsteil 1 ein zweiter Zylinderraum 30 gebildet. Der Befestigungsabschnitt 26 ist mehrfach, vorzugsweise drei- oder vierfach, längsgeschlitzt, so daß sich mehrere Backen 32 ergeben, die am Umfang des stirnseitigen Endes des Befestigungsteils 1 mit einem Gewinde 33 versehen sind, das in das Innengewinde der zu prüfenden Vorrichtung paßt. Der Stift 12 besitzt im Bereich des Befestigungsabschnitts 26 einen geringeren Durchmesser als im Bereich des Kolbenabschnitts 21, so daß die Backen 33 gegen die Längsachse der Vorrichtung hin zusammengedrückt werden können, wenn das Befestigungsteil 2 aus dem Zylinderstück 1 in Fig. 1 gesehen nach links herausbewegt wird.

Andererseits ist das Innere des Befestigungsteils 2 zu den Backen 32 hin mit einer kegelstumpfförmigen Schrägfläche 34 versehen, die in einer zylinderförmigen Bohrung 36 endet, in die das zylinderförmige Ende 37 derart paßt, daß im eingesetzten Zustand das Gewinde 33 fest in das Innengewinde der zu prüfenden Vorrichtung eingreift. Auf dem Außenmantel 41 des Zylinderstücks 1 und auf dem Außenmantel 42 des Kerns 3, die vorzugsweise miteinsnder fluchten, ist längsverschieblich eine Schiebemuffe 4 aufgesetzt, die über Dichtungen 43, 44 zu den Außenmänteln 41, 42 abgedichtet ist. Die Bewegung der Schiebemuffe 4 wird begrenzt durch vorzugsweise ringförmige Anschläge 45, 46 auf den Außenmantel 41 bzw. 42. Im Bereich zwischen den Dichtungen 43, 44 besitzt die Schiebemuffe 4 einen Innendurchmesser, der derart größer ist als der Außenmantel 41 bzw. 42, daß sich ein zylindrischer Zwischenraum ergibt.

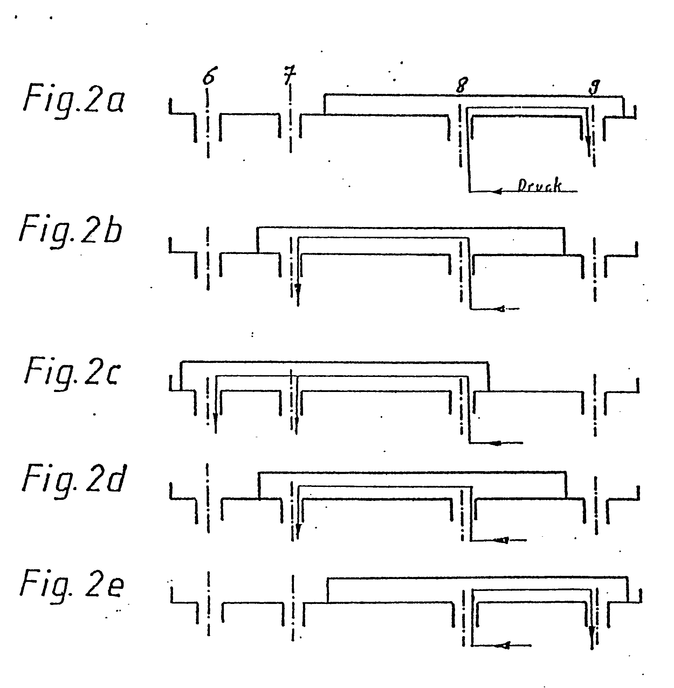

Die Schiebemuffe kann in mehrere Stellungen gebracht werden, die nachstehend noch anhand der Figuren 2a bis 2e beschrieben werden. In diesen Stellungen werden unterschiedliche Wege für das Druckmedium hergestellt. Diese Wege werden bei dem Ausführungsbeispiel durch Bohrungen im Kern 3 und im Zylinderstück 1 gebildet.

Im einzelnen steht eine vorzugsweise zentrische Anschlußbohrung 51, an der vorzugsweise mittels eines Gewindes die Druckleitung angeschlossen ist, über eine Radialbohrung 8 im Kern 3 mit dem Zwischenraum 48 zwischen dem Aussenmantel 42 des Kerns 3 und dem Innenmantel der Schiebemuffe 4 in Verbindung. Die Position der Bohrung 8 ist derart gewählt, daß sie in allen Stellungen der Schiebemuffe 4 geöffnet, d.h. daß dem Zwischenraum 48 von der Bohrung 51 über die Bohrung 8 immer Druckmedium, insbesondere Druckluft, zugeführt wird.

Ein weiterer Druckweg wird über die radiale Einstichbohrung 9 und die Längsbohrung 10 im Kern 3 vom Zwischenraum 48 zum ersten Zylinderraum 15 gebildet, wobei die Bohrung 9 derart positioniert ist, daß sie mit dem Zwischenraum 48 nur in Verbindung steht, wenn sich die Schiebemuffe 4 in ihrer hintersten in Fig. 1 ganz rechten Stellung befindet.

Der erste Zylinderraum 15 steht über eine Radialbohrung 7 im Außenmantel 41 des Zylinderstücks 1 mit der Außenluft in Verbindung, wenn sich die Schiebemuffe 4 in ihrer hintersten Stellung befindet (Fig. 1, Fig. 2a und 2e). In allen anderen Stellungen (Fig. 2b bis 2d) stellt die Bohrung 7 eine Druck erbindung vom Zwischenraum 48 zur Rückseite 49 des Kolbenabschnitts 47 des Befestigungsteils 2 her.

Eine weitere Radialbohrung 6 im Außenmantel 41 des Gewindeteils 1 verbindet die Außenluft mit dem zweiten Zylinderraum 30 ausgenommen dann, wenn sich die Schiebemuffe 4 in ihrer äußersten linken Stellung (Fig. 1, Fig. 2c) befindet, in der der Zwischenraum 48 mit dem zweiten Zylinderraum 30 verbunden wird.

Es sei darauf hingewiesen, daß anstelle jeweils nur einer einzigen Bohrung 6, 7, 8, 9, 10 auch mehrere einander entsprechende Bohrungen vorgesehen sein könnten. Ferner müßten die Bohrungen 6, 7, 8, 9 nicht senkrecht zur Längsachse der Vorrichtung verlaufen, sondern könnten auch unter einem schrägen Winkel angeordnet sein.

Es sei ferner darauf hingewiesen, daß alle Elemente der Vorrichtung, abgesehen von den Dichtungen, vorzugsweise aus Metall, insbesondere Aluminium, Stahl oder Messing bestehen können und Drehteile sein werden. In Einzelfällen mag auch die Verwendung von Kunststoff möglich sein.

Anhand der Figuren 2a bis 2e wird nun die Funktion der erfindungsgemäßen Vorrichtung beschrieben.

In der ersten Stellung gemäß Fig.2a ist der Zylinderraum 15 von der Druckleitung 51 über die Bohrung 8, den Zwischenraum 48, die Bohrungen 9 und 10 unter Druck gesetzt, während der rückwärtige Raum 49 über die Bohrung 7 mit der Außenluft in Verbindung steht. Des Befestigungsteil 2 wird somit in Fig. 1 nach links verschoben, so daß die Backen 32 aus dem Zylinderstück 1 herausragen und über die Schrägflächen 27, 29 zentrisch nach innen gedrückt sind. Beim Ansetzen an die zu prüfende Vorrichtung lassen sie sich somit einfach in die Gewindebohrung einstecken, so daß kein mühsames Verschrauben erforderlich ist. Die Stirnseite der zu prüfenden Vorrichtung liegt dann an dem Dichtungsring 24 an, so daß keine weitere Bewegung der erfindungsgemäßen Einrichtung nach links mehr möglich ist.

Da die Einrichtung bei ihrer Anwendung praktisch nur an der Schiebemuffe 4 mit einer Hand gehalten und in Richtung zur Anschlußstelle bewegt und gedrückt wird, verschiebt sich nun die Schiebemuffe 4 auf dem Außenmantel 41 bzw. 42 in Fig. 1 nach links und erreicht dabei eine zweite Stellung gemäß Fig. 2b, in der der erste Zylinderraum 15 über die nun ins Freie gehenden Bohrungen 10, 9 entlastet wird, während der rückwärtige Raum 49 von der Bohrung 51 über die Bohrung 8, den Zwischenraum 48 und die Bohrung 7 unter Druck versetzt wird, so daß sich dss Befestigungsteil 2 in Fig. 1 nach rechts bewegt. Hierbei läuft die Schrägfläche 34 auf der Stirnkante des Stiftes 12, so daß die Becken 32 aufgespreizt werden und das Gewinde 33 in das Innengewinde der zu prüfenden Vorrichtung genauso eingreift, als wenn es in die Vorrichtung eingeschrsubt worden wäre.

Während der kontinuierlichen Weiterbewegung der Schiebemuffe 4 wird die äußerste linke Stellung (Fig. 2c) erreicht, in der einerseits der Druck in dem rückwärtigen Raum 49 aufrechterhalten und dss Befestigungsteil 2 in seiner rechten Stellung gehalten wird, so daß die gesamte Vorrichtung stabil fixiert bleibt, während andererseits über die Bohrung 6 von Zwischenraum 48 nun Druckluft zum zweiten Zylinderraum 30 und aus diesem über die Längsschlitze zwischen den Backen 32 in die zu prüfende Vorrichtung geleitet wird. In dieser äußersten linken Stellung (Fig. 1) der Schiebemuffe 4 wird also die zu prüfende Vorrichtung dauernd unter Druck gesetzt. Aufgrund der Anlage der Stirnseite der zu prüfenden Vorrichtung an der Dichtung 24 kann keine Luft entweichen.

Der Abkupplungsvorgang der erfindungsgemäßen Einrichtung von der zu prüfenden Vorrichtung erfolgt in entgegengesetzter Richtung, beginnend mit der Rückbewegung der Schiebemuffe 4 in die vierte Stellung der Fig. 2d, die der zweiten Stellung gemäß Fig. 2b entspricht, wobei die Druckzuführung zur zu prüfenden Vorrichtung gesperrt wird. Aufgrund des nach wie vor im rückwärtigen Raum 49 herrschenden Druckes bleibt das Befestigungsteil 2 nach wie vor fixiert.

Erst nach weiterer Rückbewegung der Schiebemuffe 4 zur Ausgangsstellung (Fig. 2e) entsprechend der Fig. 2a wird die Bohrung 7 wieder mit der Außenluft verbunden, so daß die Luft aus dem rückwärtigen Raum 49 entweichen kann während gleichzeitig der erste Zylinderraum 15 über die Bohrungen 9, 10 unter Druck gesetzt wird. Das Befestigungsteil 2 wird dabei in Fig. 1 nach links bewegt, die Schrägflächen 27, 29 kommen in Anlage miteinander und drücken die Backen 32 wiederum nach innen zusammen, so daß die erfindungsgemäße Einrichtung mit einer einzigen Längsbewegung wieder ausgefahren werden kann.

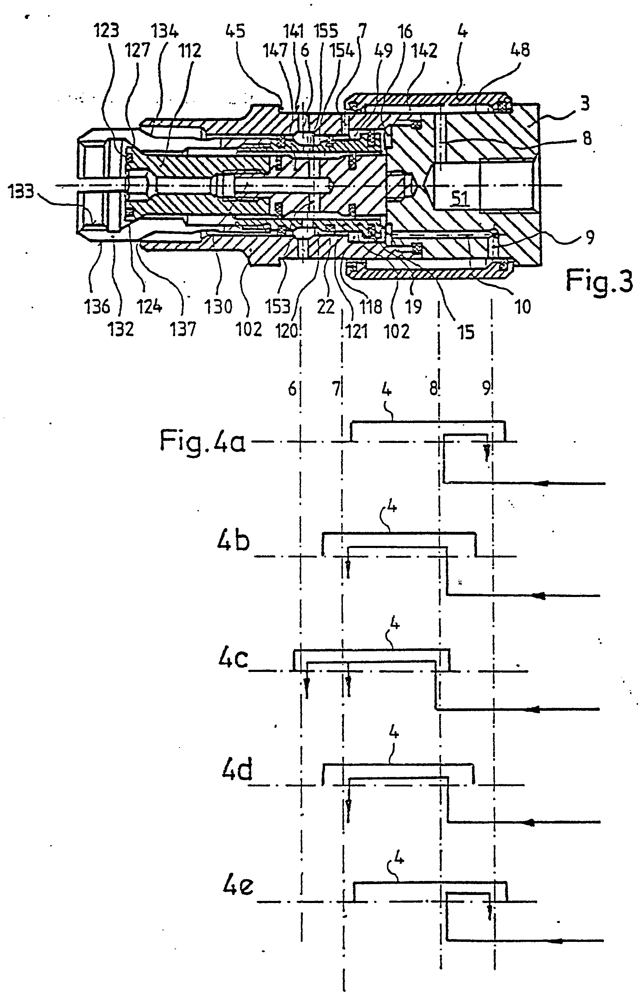

Fig. 3 zeigt ein weiteres Ausführungsbeispiel der erfindungsgemäßen Steckkupplung zum Anschluß an ein Außengewinde.

Ein Zylinderstück 101 ist auf der einen Seite durch einen zylindrisch ausgebildeten Kern 3 abgeschlossen. Im Inneren des Zylinderstücks 101 ist auf einem zentrisch in der Stirnseite 16 befestigten Bolzen 112 ein Befestigungsteil 102 längsverschieblich gelagert. Die eine Stirnseite des Befestigungsteils 102 bildet mit der Stirnseite 16 des Kerns 3 und einer erweiterten Zylinderbohrung im Zylinderstück 101 den ersten Zylinderraum 15, wobei das kolbenfürmig ausgestaltete Stirnende des Befestigungsteils 102 zur Zylinderbohrung hin mittels einer Dichtung 19 druckdicht geführt ist. Das Zylinderstück 101 besitzt eine weitere engere Zylinderbohrung 120, in der der mittlere Abschnitt 121 des Befestigungsteils 102 über eine Dichtung 22 druckdicht abgedichtet geführt ist.

Der Bolzen 112 ist gegenüber dem Stift 12 des ersten Ausführungsbeispiels wesentlich stärker ausgeführt. Er trägt an seiner der Ankupplungsstelle zugewandten Stirnseite eine Dichtung 123 und seine Mantelfläche ist von dieser Stirnseite weg mit einer Schrägfläche 129 versehen, die mit einer Schrägfläche 127 im Inneren von Spannbacken 132 am Befestigungsteil 112 zusammenarbeitet. Der Bolzen 112 besitzt ferner eine zentrische Bohrung 131 sowie mindestens eine radiale Bohrung 153, die zu einem Zwischenraum 154 zwischen dem Befestigungsteil 112 und dem Inneren des Zylinderstücks 101 führt, der über mindestens eine Radialbohrung 115 über den Raum 130 mit der Radialbohrung 6 in Verbindung steht. Hierdurch wird die Ankupplungsstelle entweder mit der Außenluft oder mit der Druckleitung 51 je nach Stellung der Muffe 4 verbunden.

Die Spannbacken 132 besitzen an ihrer Innenseite ein Gewinde 133, das mit dem Außengewinde der anzukuppelnden Vorrichtung in Eingriff gehen kann. Auf der Außenseite der Spannbacken 132 sind Schrägflächen 134 vorgesehen, die mit der Endkante 137 des Zylinderstücks 101 in Eingriff sind.

Auf dem Außenmantel 141 des Zylinderstücks 101 und auf dem Außenmantel 142 des Kerns 3, die vorzugsweise miteinander fluchten, ist längsverschieblich wie beim ersten Ausführungsbeispiel die Schiebemuffe 4 aufgesetzt.

Die Bohrungen 6, 7, 8, 9 und 10 entsprechen denen des ersten Ausführungsbeispiels gemäß Fig. 1. Es ist lediglich dafür gesorgt, daß die Bohrung 6, wie beschrieben, mit der zentralen Bohrung 131 in Verbindung steht.

Die Funktion der Einrichtung gemäß Fig. 3 entspricht derjenigen der Figur 1 wie dies schematisch aus den Figuren 4a bis 4e hervorgeht.

So wird gemäß Stellung der Fig. 4a durch die über die Leitungen 8, 9, 10 dem Raum 15 zugeführte Druckluft das Befestigungsteil 102 in Fig. 3 nach links verschoben, wodurch aufgrund der Schrägflächen 127, 129 die Spannbacken 132 zwangsweise geöffnet werden. Nach Verschieben der Muffe 4 in die Stellung gemäß Fig. 4b wird der Raum 15 entlastet und über die Öffnung 7 der rückwärtige Raum 49 unter Druck gesetzt, so daß sich das Befestigungsteil 102 in Fig. 3 nach rechts bewegt. Hierbei laufen die Schrägflächen 134 der Spannbacken 132 auf der Stirnkante 137 des Zylinderstücks 101 und werden somit zwangsweise in das Außengewinde der anzukuppelnden Vorrichtung gedrückt.

Bei der kontinuierlichen Weiterbewegung der Schiebemuffe 4 wird die äußerste linke Stellung (Fig. 4c) erreicht, in der einerseits der Druck in dem rückwärtigen Raum 49 aufrechterhalten und das Befestigungsteil 102 in seiner rechten Stellung gehalten wird, so daß die gesamte Steckkupplung stabil fixiert bleibt, während andererseits über die Bohrung 6 vom Zwischenraum 48 nun Druckluft über die Bohrungen 155, den Zwischenraum 154, die Bohrung 153 zur zentralen Bohrung 131 gelangt und der angekuppelten Vorrichtung zugeführt wird.

Der Abkupplungsvorgang erfolgt in entgegengesetzter Richtung, beginnend mit der Rückbewegung der Schiebemuffe 4 in die vierte Stellung der Fig. 4d, die der zweiten Stellung gemäß Fig. 4b entspricht, wobei die Druckluftzuführung über die zentrale Bohrung 131 gesperrt wird. Aufgrund des nach wie vor im rückwärtigen Raum 49 herrschenden Druckes bleibt das Befestigungsteil 102 nach wie vor fixiert.

Erst nach weiterer Rückbewegung der Schiebemuffe 4 zur Ausgangsstellung (Fig. 4e) entsprechend der Figur 4a wird die Bohrung 7 wieder mit der Außenluft verbunden, so daß die Luft aus dem rückwärtigen Raum 49 entweichen kann, während gleichzeitig der erste Zylinderraum 15 über die Bohrungen 9, 10 unter Druck gesetzt wird. Das Befestigungsteil 102 wird dabei in Fig. 3 nach links bewegt, die Schrägflächen 127, 129 kommen in Anlage miteinander und drücken die Spannbacken 132 auseinander, so daß die Steckkupplung mit einer einzigen Längsbewegung wieder abgenommen werden kann.

Es sei darauf hingewiesen, daß die erfindungsgemäße Einrichtung nicht nur zum Früfen der Funktionsfähigkeit von unter Druck arbeitenden Vorrichtungen verwendbar ist, sondern überall dort, wo eine rasche Anschluß- und Abkupplungsmöglichkeit für eine Druckzuführung gegeben sein soll.

**Patentansprüche**

1. Steckkupplung zur druckdichten Verbindung einer Druckleitung mit einer einen Gewindeanschluß aufweisenden druckmittelbetätigten Vorrichtung, wobei ein mit der Druckleitung verbundenes zylindrisches Gehäuse an seiner dem Gewindeanschluß zugewandten Stirnseite abdichtend ausgebildet ist und ein gegen das Gehäuse axial verschiebbares Befestigungsteil an seinem dem Gewinde zugewandten Ende mit Gewinde versehene Spannbacken zum Ineingriffgehen mit dem Gewindeanschluß aufweist und die Spannbacken bei einer Axialverschiebung des Befestigungsteils über eine Schrägflächenanordnung radial verstellbar sind, dadurch gekennzeichnet, daß das Befestigungsteil (2, 102) als in einer abgestuften Axialbohrung (18, 20; 118, 120) des Gehäuses (1) geführter Kolben (21, 47) ausgebildet ist, daß auf dem Außenmantel (41, 42; 141, 142) des Gehäuses (1) eine axial verschiebbare, an ihren beiden Kanten gegenüber dem Außenmantel (41, 42) abgedichtete und dazwischen einen ringförmigen Raum (48) freilassende Muffe (4) angebracht ist, daß der Kolben (21, 47) durch das Druckmedium über Druckwege (7 bis 10) und den ringsförmigen Raum (48) in beiden Axialrichtungen mit Druck beaufschlagbar ist, daß die Axialrichtungen mit Druck beaufschlagbar ist, daß die Druckleitung mit der druckmittelbetätigten Vorrichtung über Druckwege (6, 8) un den ringsförmigen Raum (48) verbindbar ist, und daß der eine Druckweg (8) immer in Verbindung mit der Druckleitung steht und die anderen Druckwege (6, 7, 9, 10) so angeordnet sind, daß sie je nach Stellung der Muffe (4) mit der Druckleitung (51) oder der Außenluft in Verbindung stehen.

2. Steckkupplung nach Anspruch 1, dadurch gekennzeichnet, daß der Kolben (21, 47) auf einem lagefixierten axialen Bolzen (12) geführt ist.

3. Steckkupplung nach Anspruch 2, dadurch gekennzeichnet, daß die Spannbacken (32, 132) in ihrer Eingriffs-Stellung fixierbar sind.

4. Steckkupplung nach einem der vorhergehenden Ansprüche, dadurch gekennzeichnet, daß der Innenraum (15, 49) des zylindrischen Gehäuses einerseits durch die Stirnseite (16) eines Kerns (3) abgegrenzt ist, in dem eine Bohrung (51) zum Anschluß der Druckleitung vorgesehen ist, die über einen Druckweg (8) mit dem Zwischenraum (48) zwischen dem Außenmantel (41, 42) und der Muffe (4) in allen Stellungen der Muffe (4) in Verbindung steht.

5. Steckkupplung nach Anspruch 4, dadurch gekennzeichnet, daß im Kern (3) zwischen der Stirnfläche (16) und dem Zwischenraum (48) ein Druckleitungsweg (9, 10) angeordnet ist, der in der Einführstellung der Steckkupplung den Zwischenraum (48) mit dem der dem Gewinde abgewandten Seite des Kolbens liegenden Zylinderraum (15) verbindet.

6. Steckkupplung nach Anspruch 1, dadurch gekennzeichnet, daß der auf dem Gewindeanschluß (33; 133) abgewandten Stirnseite des Kolbens gebildete Zylinderraum (49) über eine Bohrung mit dem Außenmantel (41) des zylindrischen Gehäuses (1; 101) in Verbindung steht, wobei die Bohrung (7) derart angeordnet ist, daß sie in der Ankupplungsstellung (Fig. 2a, 4a) der Muffe (4) mit der Außenluft in Verbindung steht, während sie in den anderen Stellungen der Muffe (4) Druckmedien vom Zwischenraum (48) in den Zylinderraum (49) leitet.

7. Steckkupplung nach Anspruch 1, dadurch gekennzeichnet, daß der Gewindeanschluß (33; 133) mit dem Außenmantel (41; 141) des zylindrischen Gehäuses (1; 101) über eine Bohrung (6) in Verbindung steht, die nur in der angekuppelten Stellung der Steckkupplung von der Muffe (4) überdeckt ist und über den Zwischenraum (48) Druckluft an den Gewindeanschluß (33; 133) legt.

8. Steckkupplung nach Anspruch 1, dadurch gekennzeichnet, daß das zylindrische Gehäuse mit dem Kern (3) als ein befestigbares, insbesondere verschraubbares Zylinderstück (1; 101) ausgebildet ist, an dessen dem Kern (3) abgewandten Stirnseite sich die Anschlußöffnung befindet, durch die die Spannbacken (32, 132) hindurchragen.

9. Steckkupplung nach Anspruch 8, dadurch gekennzeichnet, daß im Inneren des Zylinderstücks (1) nahe der Anschlußöffnung Schrägflächen (27) ausgebildet sind, die mit Schrägflächen (29) der Spannbacken (32) zusammenwirken.

10. Steckkupplung nach Anspruch 1, dadurch gekennzeichnet, daß der Kolben (21, 47) mittels Dichtungen (19, 22) geführt ist.

11. Steckkupplung nach Anspruch 2, dadurch gekennzeichnet, daß im Bolzen (12) eine zentrale Bohrung (130) vorgesehen ist, die über mindestens eine Radialbohrung (153) je nach Stellung der Muffe (4) mit der Druckleitung (51) oder der Außenluft in Verbindung stehen.

12. Verwendung einer Steckkupplung nach einem der vorhergehenden Ansprüche zum Anschluß einer Druckquelle an auf Druckfestigkeit zu prüfende Vorrichtungen.

**Claims**

1. Plug coupling for pressure-tight coupling of a pressure duct to a device actuated by pressure fluid and provided with a threaded connection, wherein a cylindrical housing connected to the pressure duct is sealingly formed at its face side adjacent to the threaded connection and a fixing part axially shiftably in respect of the housing is provided at its end adjacent to the thread with clamping jaws provided with a thread for engaging the threaded connection and the clamping jaws are radially adjustable upon axial shifting of the fixing element, by means of a ramp surface arrangement, characterized in that the fixing element (2, 102) is formed as a piston (21, 47) guided in a stepped axial bore (18, 20; 118, 120) of the housing (1), that on the outer surface (41, 42; 141, 142) of the housing (1) an axially shiftable sleeve is arranged being sealed at its face edges in respect of the outer surface (41, 42) and leaving an annular space (48) therebetween, that the piston (21, 47) may have pressure applied thereto by means of the pressure fluid through pressure paths (7 to 10) and the annular space (48) in the two axial directions, that the pressure duct is connectable to the pressure fluid actuable device through pressure paths (6, 8) and the annular space (48), and that the one pressure path (8) is continuously in connection to the pressure duct and that the other pressure paths (6, 7, 9, 10) are arranged such that depending on the position of the sleeve (4) they are in connection to the pressure duct (51) or the atmosphere.

2. Plug coupling of claim 1 characterized in that the piston (21, 47) is guided on a stationary axial bolt (12).

3. Plug coupling of claim 2 characterized in that the clamping jaws (32, 132) are fixable in their position of engagement.

4. Plug coupling of any of the prece ding claims characterized in that the interior space (15, 49) of the cylindrical housing is at the one side defined by the face surface (16) of a core (3), in which a bore (51) is provided for connection of the pressure duct, which through a pressure path (8) is in connection with the annular space (48) between the outer surface (41, 42) and the sleeve (4) in all positions of the sleeve (4).

5. Plug coupling of claim 4, characterized in that within the core (3) between the face surface (16) and the annular space (48) a pressure duct path (9, 10) is provided, which in the applying position of the plug coupling connects the annular space (48) with the cylinder space (15) provided on that side of the piston remote from the thread.

6. Plug coupling of claim 1, characterized in that the cylindrical space (4g) formed at that face side of the piston remote from the thread connection (33; 133) is connected via a bore with the outer surface (41) of the cylindrical housing (1; 101) the bore (7) being arranged such that in the coupling position (Fig. 2a, 4a) of the sleeve (4) it is in connection to the atmosphere whilst in the other positions of the sleeve (4) it supplies pressure fluid from the annular space (48) to the cylindrical space (49).

7. Plug coupling of claim 1, characterized in that the thread connection (33; 133) is in connection with the outer surface (41; 141) of the cylindrical housing (1; 101) via a bore (6) which only in the coupled position of the plug coupling is covered by the sleeve (4) and applies pressure air through the annular space (48) to the thread connection (33; 133).

8. Plug coupling of claim 1 wherein the cylindrical housing together with the core (3) is formed as a fixable, in particular threadable cylindrical member (1; 101) at that face side of which remote from the core (3) the connection opening is provided through which the clamping jaws (32, 132) project.

9. Plug coupling according to claim 8, characterized in that in the interior of the cylindrical housing (1) adjacent to the connection opening inclined surface (27) are formed cooperating with inclined surfaces (29) of the clamping jaws (32).

10. Plug coupling of claim 1, characterized in that the piston (21, 47) is guided by means of sealings (19, 22).

11. Plug coupling of claim 2, characterized in that in bolt (12) a central bore (130) is provided which depending on the position of the sleeve (4) is in connection via at least a radial bore (153) with the pressure duct (51) or the atmosphere.

12. Use of the plug coupling according to any of the preceding claims for conneting a pressure source to devices to be tested in respect of pressure-tightness.

**Revendications**

1. Accouplement à emboîtement pour relier, avec étanchéité à la pression, une conduite à pression à un dispositif actionné par pression et présentant un raccord fileté, dans lequel un boîtier cylindrique relié à la conduite à pression est rendu étanche du côté de sa face frontale tournée vers le raccord fileté, et une pièce de fixation pouvant se déplacer axialement par rapport au boîtier est pourvue, à son extrémitéé tournée vers le filetage, de mâchoires de serrage pourvues d'un filet pour venir en prise avec le raccord fileté, tandis que les mâchoires de serrage peuvent être déplacées radialement par suite d'un déplacement axial de la pièce de fixation, grâce à un dispositif à surface oblique, caractérisé en ce que la pièce de fixation (2, 102) est constituée par un piston (21, 27) guidé dans un alésage axial étagé (18, 20; 118, 120) du boîtier (1), en ce que, sur l'enveloppe extérieure (41, 42; 141, 142) du boîtier (1) est disposée une douille (4) pouvant se déplacer axialement avec une étanchéité à ses deux bords par rapport à l'enveloppe extérieure (41, 42) et laissant, entre ceux-ci, une cavité annulaire libre (48), en ce que le piston (21, 47) peut être actionné par le fluide sous pression par des passages de pression (7 à 10) et par la cavité annulaire (48) dans les deux directions axiales, en ce que la conduite à pression peut être reliée au dispositif actionné par l'intermédiaire des passages de pression (6, 8) et de la cavité annulaire (48), et en ce qu'un passage de pression (8) est toujours en communication avec la conduite à pression, et les autres passages de pression (6, 7, 9, 10) sont disposés de manière à ce que la douille (4) soit en communication avec la conduite à pression (51) ou l'air extérieur, suivant la position de celle-ci. 2. Accouplement à emboîtement selon la revendication 1, caractérisé en ce que le piston (21, 47) est guide par un boulon (12) axial, à position fixe.

3. Accouplement à emboîtement selon la revendication 2, caractérisé en ce que les mâchoires de serrage (32, 132) peuvent être fixées dans leur position de prise.

4. Accouplement à emboîtement selon l'une des revendications précédentes, caractérisé en ce que l'enceinte intérieure (15, 49) du boîtier cylindrique est limitée, d'une part, par la face frontale (16) d'un noyau (3) dans lequel est prévu un alésage (51) pour le raccordement à la conduite à pression qui est en communication, par un passage de pression (6) avec la cavité intermédiaire (48) entre l'enveloppe extérieure (41, 42) et la douille (4) pour toutes les positions de la douille (4).

5. Accouplement à emboîtement selon la revendication 4, caractérisé en ce qu'un passage de pression (9, 10) est disposé dans le noyau (3) entre la surface frontale (16) et la cavité intermédiaire (48), ce passage reliant, en position de montage de l'accouplement à emboîtement, la cavité intermédiaire (48) avec l'enceinte cylindrique (15) située du côté du piston opposé au filetage.

6. Accouplement à emboîtement selon la revendication 1, caractérisé en ce que l'enceinte cylindrique (49) constituée du côté frontal du piston opposé au raccord fileté (33; 133) est en communication, par un alésage, avec l'enveloppe extérieure (41) du boîtier cylindrique (1; 101), tandis que l'alésage (7) est disposé de manière à ce que celui-ci soit en communication avec l'air extérieur en position d'accouplement (figure 2a, 4a) de la douille (4), tandis que dans les autres positions de la douille (4), il amène le fluide sous pression de la cavité intermédiare (48) dans l'enceinte cylindrique (49).

7. Accouplement à emboîtement selon la revendication 1, caractérisé en ce que le raccord fileté (33; 133) est en communication avec l'enveloppe extérieure (41; 141) du boîtier cylindrique (1; 101) par un alésage (6), qui est recouvert par la douille (4) uniquement pour la position d'accouplement de l'accouplement à emboîtement et qui amène de l'air comprimé au raccord fileté (33; 133) par la cavité intermédiaire (48).

8. Accouplement à emboîtement selon la revendication 1, caractérisé en ce que le boîtier cylindrique est constitué par une pièce cylindrique (1; 101) pouvant être fixée et, plus particulièrement, pouvant être vissée sur un noyau (3), l'ouverture de raccordement se trouvant sur la face frontale opposée à ce noyau (3) et les mâchoires de serrage (32, 132) traversant cette ouverture.

9. Accouplement à emboîtement selon la revendication 8, caractérisé en ce que, à l'intérieur de la pièce cylindrique (1) sont disposées des surfaces obliques (27) à proximité de l'ouverture de raccordement, celles-ci coopérant avec des surfaces obliques (29) des mâchoires de serrage (32).

10. Accouplement à emboîtement selon la revendication 1, caractérisé en ce que le piston (21, 47) est guidé par des joints (19, 22).

11. Accouplement à emboîtement selon la revendication 2, caractérisé en ce qu'un alésage central (130) est prévu dans le boulon (12), cet alésage étant en communication avec la conduite à pression (51) ou l'air extérieur par au moins un alesage radical (153), suivant la position de la douille (4).

12. Utilisation d'un accouplement à emboîtement selon les revendications précédentes, pour raccorder une source de pression à des appareils dont la résistance à la pression doit être vérifiée.

Fig. 1

Fig.2a

Fig.2b

Fig.2c

Fig.2d

Fig.2e

Druck

6   7   8   9

0 128 939

Fig.3

Fig.4a

4b

4c

4d

4e